# EUROPEAN PATENT APPLICATION

(11) **EP 4 831 245 A1**
(43) Date of publication of application: **28.10.2026**
(21) Application number: 24907964.1
(22) Date of filing: 10.12.2024
(51) Int. Cl.: C08L 69/00, C08L 83/10, C08K 7/14, C08K 5/5399, C08K 5/51, C08L 83/06

(54) **POLYCARBONATE RESIN COMPOSITION AND MOLDED ARTICLE FORMED THEREFROM**

(30) Priority: 20.12.2023 KR 20230187185
(71) Applicant: LOTTE CHEMICAL CORPORATION, Seoul 05551 (KR)
(72) Inventor: KIM, Nam Hyun, Uiwiang-si Gyeonggi-do 16073 (KR); KANG, Tae Gon, Uiwiang-si Gyeonggi-do 16073 (KR); WOO, Eun Taek, Uiwiang-si Gyeonggi-do 16073 (KR)
(74) Representative: Germain Maureau
(86) International application number: PCT/KR2024/020229
(87) International publication number: WO 2025/135680

(57) **Abstract**

A polycarbonate resin composition of the present invention comprises: about 100 parts by weight of a base resin comprising about 30 to about 95 wt% of a polycarbonate resin and about 5 to about 70 wt% of a polysiloxane-polycarbonate copolymer resin; about 5 to about 50 parts by weight of a glass fiber; about 1 to about 20 parts by weight of a phosphorus-based flame retardant; and about 0.1 to about 2 parts by weight of a polydimethylsiloxane with a terminal reactive group having a kinematic viscosity of about 5 to about 200 cSt, measured at 40°C in accordance with ASTM D445. The polycarbonate resin composition exhibits excellent impact resistance, rigidity, chemical resistance, appearance characteristics, (thin film) flame retardancy, balance thereof and the like.

## Description

### [Technical Field]

The present invention relates to a polycarbonate resin composition and a molded article formed therefrom. More particularly, the present invention relates to a polycarbonate resin composition having excellent properties in terms of impact resistance, rigidity, chemical resistance, appearance characteristics, (thin film) flame retardancy, a balance of properties thereof, and the like, and a molded article formed therefrom.

### [Background Art]

Due to excellent mechanical strength, heat resistance, transparency, and the like, polycarbonate resins are widely applied to various fields including office automation devices, electrical/electronic products, construction materials, and the like. As a recent trend in mobile electrical/electronic products such as mobile phones, battery-integrated products are increasingly produced using metal instead of plastic for their superior design, lightness, and waterproof functions. However, there is still demand for products that utilize plastic materials for batteries and rear covers to ensure affordability and stability. In particular, the application of plastic materials to rear covers requires not only high rigidity and impact resistance to prevent issues like liquid crystal breakage and the like, but also clear coating or post-injection painting processes to achieve various colors and daily scratch protection. In addition, in the case of mobile electrical/electronic products and the like, thin film flame retardant materials are required according to the application of fast-charging and high-capacity batteries and the trend toward slimness.

To improve rigidity and other properties of plastic materials, a polycarbonate resin reinforced with inorganic fillers, such as glass fiber, is used in the art. However, an excess of glass fiber can deteriorate impact resistance, appearance characteristics, and efficiency and effects of a painting process.

Therefore, there is a need for development of a polycarbonate resin composition that has excellent properties in terms of impact resistance, rigidity, chemical resistance, appearance characteristics, (thin film) flame retardancy, a balance of properties thereof, and the like.

The background art of the present invention is disclosed in Korean Patent Laid-open Publication No. 10-2022-0056273, and the like.

### [Disclosure]

### [Technical Problem]

It is one object of the present invention to provide a polycarbonate resin composition that has excellent properties in terms of impact resistance, rigidity, chemical resistance, appearance characteristics, (thin film) flame retardancy, a balance of properties thereof, and the like.

It is another object of the present invention to provide a molded article formed from the polycarbonate resin composition.

The above and other objects of the present invention can be achieved by the present invention described below.

### [Technical Solution]

1. One aspect of the present invention relates to a thermoplastic resin composition. The polycarbonate resin composition comprises: about 100 parts by weight of a base resin comprising about 30 wt% to about 95 wt% of a polycarbonate resin and about 5 wt% to about 70 wt% of a polysiloxane-polycarbonate copolymer resin; about 5 to about 50 parts by weight of glass fiber; about 1 to about 20 parts by weight of a phosphorus flame retardant; and about 0.1 to about 2 parts by weight of a polydimethylsiloxane containing a terminal reactive group and having a kinematic viscosity of about 5 cSt to about 200 cSt, as measured at 40°C in accordance with ASTM D445.
2. In embodiment 1, the polycarbonate resin may have a weight average molecular weight of about 10,000 g/mol to about 200,000 g/mol, as measured by gel permeation chromatography (GPC).
3. In embodiment 1 or 2, the polycarbonate-polysiloxane copolymer resin may comprise about 70 wt% to about 99 wt% of a polycarbonate block and about 1 wt% to about 30 wt% of a polysiloxane block.
4. In embodiments 1 to 3, the polycarbonate-polysiloxane copolymer resin may have a weight average molecular weight of about 10,000 g/mol to about 50,000 g/mol, as measured by gel permeation chromatography (GPC).
5. In embodiments 1 to 4, the terminal reactive group of the polydimethylsiloxane may comprise at least one of a hydroxyl group, an epoxy group, and a maleic anhydride group.
6. In embodiments 1 to 5, the phosphorus flame retardant may comprise at least one of a phosphazene compound, a phosphate compound, a phosphonate compound, a phosphinate compound, and a phosphine oxide compound.
7. In embodiments 1 to 6, a weight ratio of the polysiloxane-polycarbonate copolymer resin to the glass fiber may range from about 1:0.1 to about 1:3.
8. In embodiments 1 to 7, a weight ratio of the polysiloxane-polycarbonate copolymer resin to the polydimethylsiloxane containing a terminal reactive group may range from about 1:0.005 to about 1:0.1.
9. In embodiments 1 to 8, a weight ratio of the glass fiber to the polydimethylsiloxane containing a terminal reactive group may range from about 1:0.01 to about 1:0.3.
10. In embodiments 1 to 9, a weight ratio of the phosphorus flame retardant to the polydimethylsiloxane containing a terminal reactive group may range from about 1:0.01 to about 1:0.5.
11. In embodiments 1 to 10, the polycarbonate resin composition may have a notched Izod impact strength of about 8 kgf·cm/cm to about 30 kgf·cm/cm, as measured on a 1/8" thick specimen in accordance with ASTM D256.
12. In embodiments 1 to 11, the polycarbonate resin composition may have a flexural modulus of about 23,000 kgf/cm² to about 80,000 kgf/cm², as measured on a 1/4" thick specimen at a rate of 2.8 mm/min in accordance with ASTM D790.
13. In embodiments 1 to 12, the polycarbonate resin composition may have a fracture height of about 30 cm or higher, at which a 2 mm thick specimen is broken upon application of impact with a drop test device using a 2 kg weight according to a DuPont drop test method after the specimen is immersed in a thinner solution for 2 minutes and 30 seconds, dried at 80°C for 20 minutes, and left at room temperature for 24 hours.
14. In embodiments 1 to 13, the polycarbonate resin composition may have a flame retardancy of V-0 or higher, as measured on a 0.6 mm thick specimen in accordance with the UL-94 vertical test method.
15. Another aspect of the present invention relates to a molded article. The molded article is formed from the polycarbonate resin composition according to any one of embodiments 1 to 14.

### [Advantageous Effects]

The present invention provides a polycarbonate resin composition that has excellent properties in terms of impact resistance, rigidity, chemical resistance, appearance characteristics, (thin film) flame retardancy, a balance of properties thereof, and the like, and a molded article formed therefrom.

### [Best Mode]

Hereinafter, embodiments of the present invention will be described in detail.

A polycarbonate resin composition according to the present invention comprises: (A) a polycarbonate resin; (B) a polysiloxane-polycarbonate copolymer resin; (C) glass fiber; (D) a phosphorus flame retardant; and (E) a polydimethylsiloxane containing a terminal reactive group.

As used herein to represent a numerical range, "a to b" is defined as "≥ a and ≤ b".

### (A) Polycarbonate resin

The polycarbonate resin according to one embodiment of the present invention may be a polycarbonate resin used in typical thermoplastic resin compositions. For example, the polycarbonate resin may be an aromatic polycarbonate resin prepared by reacting diphenols (aromatic diol compounds) with a carbonate precursor, such as phosgene, halogen formate, or carbonate diester.

In some embodiments, the diphenols may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, and the like, without being limited thereto. For example, the diphenol may be 2,2-bis(4-hydroxyphenyl)propane, 2,2-bis(3,5-dichloro-4-hydroxyphenyl)propane, 2,2-bis(3-methyl-4-hydroxyphenyl)propane, 2,2-bis(3,5-dimethyl-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the carbonate precursors may include dimethyl carbonate, diethyl carbonate, dibutyl carbonate, dicyclohexyl carbonate, diphenyl carbonate, ditolyl carbonate, bis(chlorophenyl) carbonate, m-cresyl carbonate, dinaphthyl carbonate, carbonyl chloride (phosgene), diphosgene, triphosgene, carbonyl bromide, bishaloformate, and the like. These may be used alone or as mixtures thereof.

The polycarbonate resin may be a branched polycarbonate resin. For example, the polycarbonate resin may be a polycarbonate resin prepared by adding a tri- or higher polyfunctional compound, specifically, a tri- or higher valent phenol group-containing compound, in an amount of about 0.05 mol% to about 2 mol% based on the total number of moles of the diphenols used in polymerization.

The polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.

In some embodiments, the polycarbonate resin may have a weight average molecular weight (Mw) of about 10,000 g/mol to about 200,000 g/mol, for example, about 15,000 g/mol to about 100,000 g/mol, as measured by gel permeation chromatography (GPC). Within this range, the polycarbonate resin composition can have good mechanical properties, heat resistance, and the like.

In some embodiments, the polycarbonate resin may be present in an amount of about 30 wt% to about 95 wt%, for example, about 40 wt% to about 90 wt%, based on 100 wt% of a base resin (A+B) comprising the polycarbonate resin and the polysiloxane-polycarbonate copolymer resin. If the content of the polycarbonate resin is less than 30 wt% based on 100 wt% of the base resin, the polycarbonate resin composition can suffer from deterioration in (thin film) flame retardancy and the like, and if the content of the polycarbonate resin exceeds about 95 wt%, the polycarbonate resin composition can suffer from deterioration in chemical resistance, appearance characteristics, and the like.

### (B) Polysiloxane-polycarbonate copolymer resin

The polysiloxane-polycarbonate copolymer resin according to one embodiment of the present invention serves to improve impact resistance, rigidity, chemical resistance, appearance characteristics, (thin film) flame retardancy, a balance of properties thereof, and the like of the polycarbonate resin composition, when used together with the polycarbonate resin, the glass fiber, the phosphorus flame retardant, and the polydimethylsiloxane containing a terminal reactive group, and the like, and comprises a polycarbonate block and a polysiloxane block. For example, the polysiloxane-polycarbonate copolymer resin may be a triblock copolymer of a polycarbonate block/polysiloxane block/polycarbonate block, and the like, without being limited thereto.

In some embodiments, the polysiloxane-polycarbonate copolymer resin may be a polysiloxane-polycarbonate copolymer resin prepared by reacting a siloxane compound represented by Formula 1, an aromatic dihydroxy compound, and a carbonate precursor.

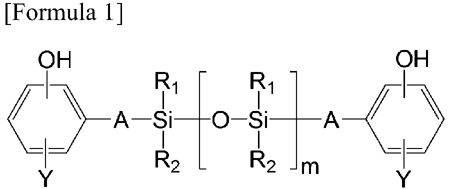

In Formula 1, R₁ and R₂ are each independently a C₁ to C₁₀ alkyl group, a C₆ to C₁₈ aryl group, or a C₁ to C₁₀ alkyl group or C₆ to C₁₈ aryl group having a halogen atom or an alkoxy group; As are each independently a substituted or unsubstituted C₂ to C₂₀ hydrocarbon group, a substituted or unsubstituted C₂ to C₂₀ hydrocarbon group having -O- or -S-; and Ys are each independently a hydrogen atom, a halogen atom, a C₁ to C₁₈ halogenated alkyl group, a cyano group (-CN), or an ester; and m may range from 2 to 1,000, for example, from 4 to 120, specifically from 10 to 100.

In some embodiments, the aromatic dihydroxy compound (diphenols) may be selected from any aromatic dihydroxy compounds typically used in preparation of polycarbonate resins, and may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, 2,2-bis(3,5-dichloro-4-hydroxyphenyl)propane, without being limited thereto. Specifically, the aromatic dihydroxy compound may be 2,2-bis(4-hydroxyphenyl)propane, 2,2-bis(3,5-dichloro-4-hydroxyphenyl)propane, 1,1-bis(4-hydroxyphenyl)cyclohexane, or the like, preferably 2,2-bis(4-hydroxyphenyl)propane, which is also referred to as bisphenol-A.

In some embodiments, the carbonate precursors may include phosgene, triphosgene, diaryl carbonate, mixtures thereof, and the like. Furthermore, the diaryl carbonates may include diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate, dicyclohexyl carbonate, and the like, without being limited thereto. These may be used alone or as a mixture thereof. For example, diphenyl carbonate may be used.

In some embodiments, the polycarbonate-polysiloxane copolymer resin may be present in an amount of about 70 wt% to about 99 wt%, for example, about 80 wt% to about 97 wt%, of a polycarbonate block derived from the aromatic dihydroxy compound, and about 1 wt% to about 30 wt%, for example, about 3 wt% to about 25 wt%, of a polysiloxane block derived from the siloxane compound. Within this range, the polycarbonate resin composition can exhibit excellent properties in terms of impact resistance, chemical resistance, flame retardancy, and the like.

In some embodiments, the polycarbonate-polysiloxane copolymer resin may have a weight average molecular weight (Mw) of about 10,000 g/mol to about 50,000 g/mol, for example, about 15,000 g/mol to about 40,000 g/mol, as measured by gel permeation chromatography (GPC). Within this range, the polycarbonate resin composition can have excellent properties in terms of impact resistance, chemical resistance, flame retardancy, moldability, and the like.

In some embodiments, the polycarbonate-polysiloxane copolymer resin may be prepared by a typical method. For example, the aromatic dihydroxy compound, the carbonate precursor, and the siloxane compound may be copolymerized by interfacial condensation polymerization, emulsion polymerization, and the like. In addition, the polysiloxane-polycarbonate copolymer resin may be obtained from commercially available products.

In some embodiments, the polysiloxane-polycarbonate copolymer resin may be present in an amount of about 5 wt% to about 70 wt%, for example, about 10 wt% to about 60 wt%, based on 100 wt% of the base resin (A+B) comprising the polycarbonate resin and the polysiloxane-polycarbonate copolymer resin. If the content of the polysiloxane-polycarbonate copolymer rein is less than 5 wt% based on 100 wt% of the base resin, the polycarbonate resin composition can suffer from deterioration in chemical resistance, appearance characteristics, and the like, and if the content of the polysiloxane-polycarbonate copolymer resin exceeds about 70 wt%, the polycarbonate resin composition can suffer from deterioration in (thin film) flame retardancy and the like.

### (C) Glass fiber

The glass fiber according to one embodiment of the present invention serves to improve impact resistance, rigidity, chemical resistance, appearance characteristics, (thin film) flame retardancy, a balance of properties thereof, and the like of the polycarbonate resin composition, when used together with the polycarbonate resin, the polysiloxane-polycarbonate copolymer resin, the phosphorus flame retardant, and the polydimethylsiloxane containing a terminal reactive group, and the like, and may comprise glass fiber used in typical thermoplastic resin compositions.

In some embodiments, the glass fiber may have a fibrous shape and may have cross-sections of various shapes, such as a circular cross-section, an oval cross-section, a rectangular cross-section, and the like. For example, glass fiber having circular and/or rectangular cross-sections is preferable in terms of mechanical properties.

In some embodiments, the glass fiber having a circular cross-section may have a cross-sectional diameter of about 5 µm to about 20 µm and a pre-processing length of about 2 mm to about 20 mm, and the glass fiber having a rectangular cross-section (flat type) may have an aspect ratio (a ratio of a long-side length to a short-side length in cross-section) of about 1.5 to about 10, a short-side length of about 2 µm to about 10 µm in cross-section, and a pre-processing length of about 2 mm to about 20 mm. Within this range, the polycarbonate resin composition can have improved rigidity, formability, and the like.

In some embodiments, the glass fiber may be subjected to surface treatment with a typical surface treating agent. The surface treating agent may include a silane compound, a urethane compound, an epoxy compound, and the like, without being limited thereto.

In some embodiments, the glass fiber may be present in an amount of about 5 to about 50 parts by weight, for example, about 5 to about 35 parts by weight, specifically about 5 to about 30 parts by weight, relative to about 100 parts by weight of the base resin. If the content of the glass fiber is less than about 5 parts by weight relative to about 100 parts by weight of the base resin, the polycarbonate resin composition can suffer from deterioration in rigidity and the like, and if the content of the glass fiber exceeds about 50 parts by weight, the polycarbonate resin composition can suffer from deterioration in chemical resistance and the like.

In some embodiments, a weight ratio of the polysiloxane-polycarbonate copolymer resin to the glass fiber may range from about 1:0.1 to about 1:3, for example, about 1:0.15 to about 1:2. Within this range, the polycarbonate resin composition can exhibit better properties in terms of chemical resistance, rigidity, appearance characteristics, and the like.

### (D) Phosphorus flame retardant

The phosphorus flame retardant according to one embodiment of the present invention serves to improve impact resistance, rigidity, chemical resistance, appearance characteristics, (thin film) flame retardancy, a balance of properties thereof, and the like of the polycarbonate resin composition, when used together with the polycarbonate resin, the polysiloxane-polycarbonate copolymer resin, the glass fiber, and the polydimethylsiloxane containing a terminal reactive group, and the like, and may comprise any phosphorus flame retardant used in typical thermoplastic resin compositions.

In some embodiments, the phosphorus flame retardant may include a phosphazene compound, a phosphate compound, a phosphonate compound, a phosphinate compound, a phosphine oxide compound, metal salts thereof, and the like. These may be used alone or as a mixture thereof.

In some embodiments, the phosphazene compound may be a cyclic phosphazene compound represented by Formula 2.

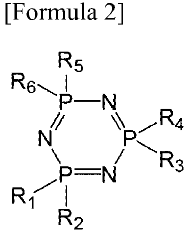

In Formula 2, R₁, R₂, R₃, R₄, R₅ and R₆ are each independently a hydrogen atom, a halogen atom, a substituted or unsubstituted C₁ to C₂₀ alkyl group, a substituted or unsubstituted C₂ to C₇ alkenyl group, a substituted or unsubstituted C₃ to C₂₀ cycloalkyl group, a substituted or unsubstituted C₂ to C₂₀ heterocycloalkyl group, a C₁ to C₂₀ alkoxy group, a C₆ to C₂₀ aryl group, a C₆ to C₂₀ aryloxy group, a C₅ to C₂₀ heteroaryl group, a substituted or unsubstituted C₃ to C₂₀ alkoxycarbonylalkyl group, a substituted or unsubstituted a C₂ to C₂₀ carbonylalkyl group, an amino group, or a hydroxyl group.

Herein, "substituted" means that a hydrogen atom is substituted with a substituent, such as a C₁ to C₁₀ alkyl group, a halogen atom, a nitro group, a cyano group, a hydroxyl group, an amino group, a C₆ to C₁₀ aryl group, a C₃ to C₁₀ cycloalkyl group, a C₃ to C₁₀ heterocycloalkyl group, a C₄ to C₁₀ heteroaryl group, or a combination thereof.

In addition, "alkyl," "alkoxy," and other "alkyl" moiety-containing substituents include both linear and branched forms, "alkenyl" includes both linear and branched forms having 2 to 8 carbon atoms and containing at least one double bond, and "cycloalkyl" includes both saturated monocyclic and saturated bicyclic ring structures having 3 to 20 carbon atoms. In addition, "aryl" refers to a cyclic organic radical derived from an aromatic hydrocarbon by removal of one hydrogen atom and includes single or fused ring systems in which each ring suitably contains 4 to 7, preferably 5 or 6, skeletal atoms. Specific examples of "aryl" may include phenyl, naphthyl, biphenyl, tolyl, and the like, without being limited thereto.

"Heterocycloalkyl" refers to a cycloalkyl group containing 1 to 3 heteroatoms selected from among N, O, and S as a skeletal atom of a saturated cyclic hydrocarbon structure and containing carbon as remaining skeletal atoms of a saturated monocyclic or bicyclic ring structure, and may include, for example, pyrrolidinyl, azetidinyl, pyrazolidinyl, oxazolidinyl, piperidinyl, piperazinyl, morpholinyl, thiomorpholinyl, thiazolidinyl, hydantoinyl, valerolactamyl, oxiranyl, oxetanyl, dioxolanyl, dioxanyl, oxathiolanyl, oxathianyl, dithianyl, dihydrofuranyl, tetrahydrofuranyl, dihydropyranyl, tetrahydropyranyl, tetrahydropyridinyl, tetrahydropyrimidinyl, tetrahydrothiophenyl, tetrahydrothiopyranyl, diazepanyl, azepanyl, and the like.

"Heteroaryl" refers to an aryl group containing 1 to 3 heteroatoms selected from among N, O, and S as a skeleton atom of an aromatic ring structure and containing carbon as remaining skeleton atoms of the aromatic ring structure. The heteroaryl group includes divalent aryl groups in which the heteroatoms in the ring structure are oxidized or quaternized to form, for example, an N-oxide or a quaternary salt. Specific examples of "heteroaryl" may include furyl, thiophenyl, pyrrolyl, pyranyl, imidazolyl, pyrazolyl, thiazolyl, thiadiazolyl, isothiazolyl, isoxazolyl, oxazolyl, oxadiazolyl, triazinyl, tetrazinyl, triazolyl, tetrazolyl, furazanyl, pyridyl, pyrazinyl, pyrimidinyl, pyridazinyl, pyrimidinyl, and the like, without being limited thereto.

In some embodiments, the phosphorus flame retardant may include an aromatic phosphate ester compound represented by Formula 3.

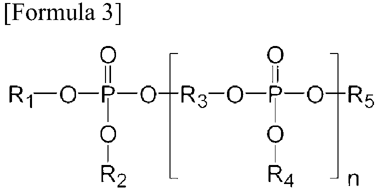

In Formula 3, R₁, R₂, R₄ and R₅ are each independently a hydrogen atom, a C₆ to C₂₀ (carbon number of 6 to 20) aryl group, or a C₆ to C₂₀ aryl group substituted with a C₁ to C₁₀ alkyl group; R₃ is a C₆ to C₂₀ arylene group or a C₆ to C₂₀ arylene group substituted with a C₁ to C₁₀ alkyl group and is derived from a diol, such as resorcinol, hydroquinone, bisphenol-A, bisphenol-S, and the like; and n is an integer of 0 to 10, for example, 0 to 4.

The aromatic phosphate ester compound represented by Formula 3 where n is 0 may include, for example, a diaryl phosphate, such as diphenyl phosphate, triphenyl phosphate, tricresyl phosphate, trixylenyl phosphate, tri(2,6-dimethylphenyl)phosphate, tri(2,4,6-trimethylphenyl)phosphate, tri(2,4-di-tert-butylphenyl)phosphate, tri(2,6-dimethylphenyl)phosphate, and the like; and the aromatic phosphate ester compound represented by Formula 3 where n is 1 may include, for example, bisphenol-A bis(diphenyl phosphate), resorcinol bis(diphenyl phosphate), resorcinol bis[bis(2,6-dimethylphenyl)phosphate], resorcinol bis[bis(2,4-di-tert-butylphenyl)phosphate], hydroquinone bis[bis(2,6-dimethylphenyl)phosphate], hydroquinone bis[bis(2,4-di-tert-butylphenyl)phosphate], and the like, without being limited thereto. These may be used alone or as a mixture thereof.

In some embodiments, the phosphorus flame retardant may be present in an amount of about 1 to about 20 parts by weight, for example, about 5 to about 15 parts by weight, specifically about 6 to about 12 parts by weight, relative to about 100 parts by weight of the base resin. If the content of the phosphorus flame retardant is less than about 1 part by weight relative to about 100 parts by weight of the base resin, the polycarbonate resin composition can suffer from deterioration in (thin film) flame retardancy and the like, and if the content of the phosphorus flame retardant exceeds about 20 parts by weight, the polycarbonate resin composition can suffer from deterioration in impact resistance, chemical resistance, (thin film) flame retardancy, and the like.

In some embodiments, a weight ratio of the polysiloxane-polycarbonate copolymer resin to the phosphorus flame retardant may range from about 1:0.1 to about 1:1, for example, about 1:0.12 to about 1:0.8. Within this range, the polycarbonate resin composition can exhibit better properties in terms of (thin film) flame retardancy, impact resistance, chemical resistance, and the like.

### (E) Polydimethylsiloxane containing a terminal reactive group

The polydimethylsiloxane containing a terminal reactive group according to one embodiment of the present invention serves to improve impact resistance, rigidity, chemical resistance, appearance characteristics, (thin film) flame retardancy, a balance of properties thereof, and the like of the polycarbonate resin composition, when used together with the polycarbonate resin, the polysiloxane-polycarbonate copolymer resin, the glass fiber, the phosphorus flame retardant, and the like, and may have a kinematic viscosity of about 5 cSt to about 200 cSt, as measured at 40°C in accordance with ASTM D445.

In some embodiments, the polydimethylsiloxane containing a terminal reactive group may have a kinematic viscosity of about 5 cSt to about 200 cSt, for example, about 10 cSt to about 100 cSt, as measured at 40°C in accordance with ASTM D445. If the kinematic viscosity of the polydimethylsiloxane containing a terminal reactive group is less than about 5 cSt, the polycarbonate resin composition can suffer from deterioration in thermal stability, moldability, impact resistance, and the like, and if the kinematic viscosity of the polydimethylsiloxane containing a terminal reactive group exceeds about 200 cSt, the polycarbonate resin composition can suffer from deterioration in transparency, moldability, and the like.

In some embodiments, the terminal reactive group of the polydimethylsiloxane may include at least one of a hydroxyl group, an epoxy group, and a maleic anhydride group.

In some embodiments, the polydimethylsiloxane containing a terminal reactive group may be present in an amount of about 0.1 to about 2 parts by weight, for example, about 0.2 to about 1.5 parts by weight, relative to about 100 parts by weight of the base resin. If the content of the polydimethylsiloxane containing a terminal reactive group is less than about 0.1 parts by weight relative to about 100 parts by weight of the base resin, the polycarbonate resin composition can suffer from deterioration in (thin film) flame retardancy, and the like, and if the content of the polydimethylsiloxane containing a terminal reactive group exceeds about 2 parts by weight, the polycarbonate resin composition can suffer from deterioration in appearance characteristics, and the like.

In some embodiments, a weight ratio of the polysiloxane-polycarbonate copolymer resin to the polydimethylsiloxane containing a terminal reactive group may range from about 1:0.005 to about 1:0.1, for example, about 1:0.007 to about 1:0.08. Within this range, the polycarbonate resin composition can exhibit better properties in terms of impact resistance, chemical resistance, appearance characteristics, and the like.

In some embodiments, a weight ratio of the glass fiber to the polydimethylsiloxane containing a terminal reactive group may range from about 1:0.01 to about 1:0.3, for example, about 1:0.015 to about 1:0.2. Within this range, the polycarbonate resin composition can exhibit better properties in terms of (thin film) flame retardancy, appearance characteristics, and the like.

In some embodiments, a weight ratio of the phosphorus flame retardant to the polydimethylsiloxane containing a terminal reactive group may range from about 1:0.01 to about 1:0.5, for example, about 1:0.01 to about 1:0.3, specifically about 1:0.02 to about 1:0.2. Within this range, the polycarbonate resin composition can exhibit better properties in terms of (thin film) flame retardancy, chemical resistance, impact resistance, and the like.

The polycarbonate resin composition according to one embodiment of the present invention may further comprise typical additives, as needed. The additives may include, for example, antioxidants, release agents, lubricants, nucleating agents, antistatic agents, stabilizers, pigments, dyes, mixtures thereof, and the like. The additives may be present in an amount of about 0.001 to about 20 parts by weight, relative to about 100 parts by weight of the base resin, without being limited thereto.

The polycarbonate resin composition according to one embodiment of the present invention may be prepared by a typical method of preparing a polycarbonate resin composition. For example, the polycarbonate resin composition may be prepared in pellet form by mixing the aforementioned components, followed by melt extrusion at about 200°C to about 300°C, for example, at about 250°C to about 280°C, using a typical twin-screw extruder.

In some embodiments, the polycarbonate resin composition may have a notched Izod impact strength of about 8 kgf·cm/cm to about 30 kgf·cm/cm, for example, about 8 kgf·cm/cm to about 25 kgf·cm/cm, as measured on a 1/8" thick specimen in accordance with ASTM D256.

In some embodiments, the polycarbonate resin composition may have a flexural modulus of about 23,000 kgf/cm² to about 80,000 kgf/cm², for example, about 25,000 kgf/cm² to about 75,000 kgf/cm², as measured on a 1/4" thick specimen at a rate of 2.8 mm/min in accordance with ASTM D790.

In some embodiments, the polycarbonate resin composition may have a fracture height of about 30 cm or higher, for example, about 30 cm to about 95 cm, at which a 2 mm thick specimen is broken upon application of impact with a drop test device using a 2 kg weight according to a DuPont drop test method after the specimen is immersed in a thinner solution for 2 minutes and 30 seconds, dried at 80°C for 20 minutes, and left at room temperature for 24 hours.

In some embodiments, the polycarbonate resin composition may have a flame retardancy of V-0 or higher, as measured on a 0.6 mm thick specimen by the UL-94 vertical test method.

A molded article according to the present invention is formed from the polycarbonate resin composition. For example, the polycarbonate resin composition may be produced into various molded articles (products) by various molding methods, such as injection molding, extrusion molding, vacuum molding, casting molding, and the like. These molding methods are well known to a person of ordinary skill in the art. The molded article has excellent properties in terms of impact resistance, rigidity, chemical resistance, appearance characteristics, (thin film) flame retardancy, a balance of properties thereof, and the like, and can be advantageously used for interior or exterior materials for mobile electric/electronic products.

### [Mode for Invention]

Next, the present invention will be described in more detail with reference to some examples. It should be understood that these examples are provided for illustration only and are not to be construed in any way as limiting the present invention.

### EXAMPLE

Details of components used in Examples and Comparative Examples are as follows.

### (A) Polycarbonate resin

A bisphenol-A polycarbonate resin (weight average molecular weight (Mw): about 22,000 g/mol) was used.

### (B) Polysiloxane-polycarbonate copolymer resin

A polysiloxane-polycarbonate copolymer resin containing 6 wt% of polydimethylsiloxane (PDMS) and having a weight average molecular weight (Mw) of about 22,000 g/mol was used.

### (C) Glass fiber

(C1) Flat type cross-sectional glass fiber (manufacturer: Nittobo, product name: CSG 3PA-832) was used.

(C2) Round type cross-sectional glass fiber (manufacturer: Owens Corning, product name: 183F) was used.

### (D) Phosphorus flame retardant

(D1) A cyclic phosphazene compound (manufacturer: Pharmicell Co. Ltd., product name: Phoretar 201) was used.

(D2) Oligomer type bisphenol-A bis(diphenyl phosphate) (manufacturer: DAIHACHI, Product name: CR-741) was used.

(D3) Oligomer type resorcinol bis(diphenyl phosphate) (manufacturer: DAIHACHI, product name: PX-200) was used.

### (E) Polydimethylsiloxane

(E1) Polydimethylsiloxane (kinematic viscosity: about 40 cSt) having a terminal reactive group (hydroxyl group) was used.

(E2) Polydimethylsiloxane (manufacturer: Momentive Co. Ltd., product name: PDMS-200, kinematic viscosity: about 40 cSt) was used.

### Examples 1 to 14 and Comparative Examples 1 to 9

The above components were mixed in amounts as listed in Tables 1, 2, 3, and 4, followed by extrusion at about 260°C, thereby preparing a polycarbonate resin composition in pellet form. Here, extrusion was performed using a twin-screw extruder (L/D=36, diameter: 45 mm) and the prepared pellets were dried at about 80°C for 5 hours or more and injection-molded in a 6 oz. injection molding machine (molding temperature: about 320°C), thereby preparing specimens. The prepared specimens were evaluated as to the following properties by the following methods, and results are shown in Tables 1, 2, 3, and 4.

### Property Evaluation

(1) Notched Izod impact strength (unit: kgf·cm/cm): Notched Izod impact strength was measured on a 1/8" thick specimen in accordance with ASTM D256.
(2) Flexural modulus (unit: kgf/cm²): Flexural modulus was measured on a 1/4" thick specimen at a rate of 2.8 mm/min in accordance with ASTM D790.
(3) Chemical resistance (post-painting impact resistance): A 2 mm thick specimen was immersed in a thinner solution for 2 minutes and 30 seconds, dried at 80°C for 20 minutes, left at room temperature for 24 hours, and then subjected to impact with a drop test device using a 2 kg weight according to a DuPont drop test method to measure a fracture height (unit: cm), at which the specimen was broken.
(4) Flame retardancy: Flame retardancy was measured on a 0.8 mm thick specimen by the UL-94 vertical test method.
(5) Appearance evaluation: After an article of a pin-gate structure was molded at a barrel temperature of 320°C in an injection molding machine, a visual inspection was conducted to check for phase separation or gas marks near the gate. (o: Absent, ×: Present)

**Table 1**

| | Example | | | | | | |
|---|---|---|---|---|---|---|---|
| | 1 | 2 | 3 | 4 | 5 | 6 | 7 |
| (A) (wt%) | 40 | 80 | 90 | 80 | 80 | 80 | 80 |
| (B) (wt%) | 60 | 20 | 10 | 20 | 20 | 20 | 20 |
| (C1) (parts by weight) | 10 | 10 | 10 | 5 | 30 | - | 10 |
| (C2) (parts by weight) | - | - | - | - | - | 10 | - |
| (D1) (parts by weight) | 8 | 8 | 8 | 8 | 8 | 8 | 6 |
| (D2) (parts by weight) | - | - | - | - | - | - | - |
| (D3) (parts by weight) | - | - | - | - | - | - | - |
| (E1) (parts by weight) | 0.5 | 0.5 | 0.5 | 0.5 | 0.5 | 0.5 | 0.5 |
| (E2) (parts by weight) | - | - | - | - | - | - | - |
| Notched Izod impact strength (kgf·cm/cm) | 14 | 14 | 15 | 22 | 13 | 15 | 17 |
| Flexural modulus (kgf/cm²) | 31,900 | 32,500 | 33,200 | 27,000 | 73,000 | 33,800 | 33,500 |
| Fracture height (cm) | 62 | 68 | 57 | 92 | 32 | 67 | 72 |
| Flame retardancy | V-0 | V-0 | V-0 | V-0 | V-0 | V-0 | V-0 |
| Appearance evaluation | O | O | O | O | O | O | O |

| | | | | | | | |
|---|---|---|---|---|---|---|---|
| *Parts by weight: parts by weight relative to 100 parts by weight of base resin (A+B) | | | | | | | |

**Table 2**

| | Example | | | | | | |
|---|---|---|---|---|---|---|---|
| | 8 | 9 | 10 | 11 | 12 | 13 | 14 |
| (A) (wt%) | 80 | 80 | 80 | 80 | 80 | 80 | 80 |
| (B) (wt%) | 20 | 20 | 20 | 20 | 20 | 20 | 20 |
| (C1) (parts by weight) | 10 | 10 | 10 | 10 | 10 | 10 | 10 |
| (C2) (parts by weight) | - | - | - | - | - | - | - |
| (D1) (parts by weight) | 12 | - | - | - | - | 8 | 8 |
| (D2) (parts by weight) | - | 6 | 12 | - | - | - | - |
| (D3) (parts by weight) | - | - | - | 6 | 12 | - | - |
| (E1) (parts by weight) | 0.5 | 0.5 | 0.5 | 0.5 | 0.5 | 0.2 | 1.5 |
| (E2) (parts by weight) | - | - | - | - | - | - | - |
| Notched Izod impact strength (kgf·cm/cm) | 12 | 14 | 9 | 14 | 8 | 13 | 14 |
| Flexural modulus (kgf/cm²) | 34,200 | 33,400 | 33,200 | 33,200 | 33,900 | 33,200 | 32,500 |
| Fracture height (cm) | 51 | 58 | 40 | 55 | 42 | 60 | 65 |
| Flame retardancy | V-0 | V-0 | V-0 | V-0 | V-0 | V-0 | V-0 |
| Appearance evaluation | ○ | ○ | ○ | ○ | ○ | ○ | ○ |

| | | | | | | | |
|---|---|---|---|---|---|---|---|
| *Parts by weight: parts by weight relative to 100 parts by weight of base resin (A+B) | | | | | | | |

**Table 3**

| | Comparative Example | | | |
|---|---|---|---|---|
| | 1 | 2 | 3 | 4 |
| (A) (wt%) | 20 | 99 | 80 | 80 |
| (B) (wt%) | 80 | 1 | 20 | 20 |
| (C1) (parts by weight) | 10 | 10 | 2 | 40 |
| (C2) (parts by weight) | - | - | - | - |
| (D1) (parts by weight) | 8 | 8 | 8 | 8 |
| (D2) (parts by weight) | - | - | - | - |
| (D3) (parts by weight) | - | - | - | - |
| (E1) (parts by weight) | 1 | 1 | 1 | 1 |
| (E2) (parts by weight) | - | - | - | - |
| Notched Izod impact strength (kgf·cm/cm) | 14 | 15 | 22 | 10 |
| Flexural modulus (kgf/cm²) | 29,000 | 32,200 | 19,500 | 90,500 |
| Fracture height (cm) | 48 | 25 | 82 | 10 or less |
| Flame retardancy | V-2 | V-0 | V-0 | V-0 |
| Appearance evaluation | ○ | × | ○ | ○ |

| | | | | |
|---|---|---|---|---|
| *Parts by weight: parts by weight relative to 100 parts by weight of base resin (A+B) | | | | |

**Table 4**

| | Comparative Example | | | | |
|---|---|---|---|---|---|
| | 5 | 6 | 7 | 8 | 9 |
| (A) (wt%) | 80 | 80 | 80 | 80 | 80 |
| (B) (wt%) | 20 | 20 | 20 | 20 | 20 |
| (C1) (parts by weight) | 10 | 10 | 10 | 10 | 10 |
| (C2) (parts by weight) | - | - | - | - | - |
| (D1) (parts by weight) | 0.5 | 25 | 8 | 8 | 8 |
| (D2) (parts by weight) | - | - | - | - | - |
| (D3) (parts by weight) | - | - | - | - | - |
| (E1) (parts by weight) | 0.5 | 0.5 | 0.01 | 3 | - |
| (E2) (parts by weight) | - | - | - | - | 0.5 |
| Notched Izod impact strength (kgf·cm/cm) | 18 | 5 | 14 | 11 | 13 |
| Flexural modulus (kgf/cm²) | 31,000 | 32,000 | 33,500 | 28,500 | 29,500 |
| Fracture height (cm) | 75 | 10 or less | 38 | 64 | 42 |
| Flame retardancy | HB | V-2 | V-1 | V-0 | V-1 |
| Appearance evaluation | ○ | ○ | ○ | × | × |

| | | | | | |
|---|---|---|---|---|---|
| *Parts by weight: parts by weight relative to 100 parts by weight of base resin (A+B) | | | | | |

It could be seen that the polycarbonate resin composition according to the present invention exhibited excellent properties in terms of impact resistance (notched Izod impact strength), rigidity (flexural modulus), chemical resistance (fracture height), (thin film) flame retardancy (flame retardancy), appearance characteristics (appearance evaluation), a balance of properties thereof, and the like.

Conversely, it could be seen that the resin composition of Comparative Example 1 prepared using an insufficient amount of the polycarbonate resin and an excess of the polysiloxane-polycarbonate copolymer resin suffered from deterioration in (thin film) flame retardancy and the like, and the resin composition of Comparative Example 2 prepared using an excess of the polycarbonate resin and an insufficient amount of the polysiloxane-polycarbonate copolymer resin suffered from deterioration in chemical resistance, appearance characteristics, and the like. It could be seen that the resin composition of Comparative Example 3 prepared using an insufficient amount of the glass fiber suffered from deterioration in rigidity and the like, and the resin composition of Comparative Example 4 prepared using an excess of the glass fiber suffered from deterioration in chemical resistance and the like. It could be seen that the resin composition of Comparative Example 5 prepared using an insufficient amount of the phosphorus flame retardant suffered from deterioration in (thin film) flame retardancy and the like, and the resin composition of Comparative Example 6 prepared using an excess of the phosphorus flame retardant suffered from deterioration in impact resistance, chemical resistance, (thin film) flame retardancy, and the like. In addition, it could be seen that the resin composition of Comparative Example 7 prepared using an insufficient amount of the polydimethylsiloxane containing a terminal reactive group suffered from deterioration in (thin film) flame retardancy and the like, and the resin composition of Comparative Example 8 prepared using an excess of the polydimethylsiloxane containing a terminal reactive group suffered from deterioration in appearance characteristics and the like, and the resin composition of Comparative Example 9 prepared using the polydimethylsiloxane (D2) instead of the polydimethylsiloxane containing a terminal reactive group suffered from deterioration in (thin film) flame retardancy, appearance characteristics, and the like.

Although some embodiments have been described herein, it will be understood by those skilled in the art that various modifications, changes, and alterations can be made without departing from the spirit and scope of the present invention. Therefore, it should be understood that these embodiments are provided for illustration only and are not to be construed in any way as limiting the present invention. The scope of the present invention should be defined by the appended claims rather than by the foregoing description, and the claims and equivalents thereto are intended to cover such modifications and the like as would fall within the scope of the present invention.

## Claims

1. A polycarbonate resin composition comprising:
about 100 parts by weight of a base resin comprising about 30 wt% to about 95 wt% of a polycarbonate resin and about 5 wt% to about 70 wt% of a polysiloxane-polycarbonate copolymer resin;
about 5 to about 50 parts by weight of glass fiber;
about 1 to about 20 parts by weight of a phosphorus flame retardant; and
about 0.1 to about 2 parts by weight of a polydimethylsiloxane containing a terminal reactive group and having a kinematic viscosity of about 5 cSt to about 200 cSt, as measured at 40°C in accordance with ASTM D445.

2. The polycarbonate resin composition according to claim 1, wherein the polycarbonate resin has a weight average molecular weight of about 10,000 g/mol to about 200,000 g/mol, as measured by gel permeation chromatography (GPC).

3. The polycarbonate resin composition according to claim 1 or 2, wherein the polycarbonate-polysiloxane copolymer resin comprises about 70 wt% to about 99 wt% of a polycarbonate block and about 1 wt% to about 30 wt% of a polysiloxane block.

4. The polycarbonate resin composition according to any one of claims 1 to 3, wherein the polycarbonate-polysiloxane copolymer resin has a weight average molecular weight of about 10,000 g/mol to about 50,000 g/mol, as measured by gel permeation chromatography (GPC).

5. The polycarbonate resin composition according to any one of claims 1 to 4, wherein the terminal reactive group of the polydimethylsiloxane comprises at least one of a hydroxyl group, an epoxy group, and a maleic anhydride group.

6. The polycarbonate resin composition according to any one of claims 1 to 5, wherein the phosphorus flame retardant comprises at least one of a phosphazene compound, a phosphate compound, a phosphonate compound, a phosphinate compound, and a phosphine oxide compound.

7. The polycarbonate resin composition according to any one of claims 1 to 6, wherein a weight ratio of the polysiloxane-polycarbonate copolymer resin to the glass fiber ranges from about 1:0.1 to about 1:3.

8. The polycarbonate resin composition according to any one of claims 1 to 7, wherein a weight ratio of the polysiloxane-polycarbonate copolymer resin to the polydimethylsiloxane containing a terminal reactive group ranges from about 1:0.005 to about 1:0.1.

9. The polycarbonate resin composition according to any one of claims 1 to 8, wherein a weight ratio of the glass fiber to the polydimethylsiloxane containing a terminal reactive group ranges from about 1:0.01 to about 1:0.3.

10. The polycarbonate resin composition according to any one of claims 1 to 9, wherein a weight ratio of the phosphorus flame retardant to the polydimethylsiloxane containing a terminal reactive group ranges from about 1:0.01 to about 1:0.5.

11. The polycarbonate resin composition according to any one of claims 1 to 10, wherein the polycarbonate resin composition has a notched Izod impact strength of about 8 kgf·cm/cm to about 30 kgf·cm/cm, as measured on a 1/8" thick specimen in accordance with ASTM D256.

12. The polycarbonate resin composition according to any one of claims 1 to 11, wherein the polycarbonate resin composition has a flexural modulus of about 23,000 kgf/cm² to about 80,000 kgf/cm², as measured on a 1/4" thick specimen at a rate of 2.8 mm/min in accordance with ASTM D790.

13. The polycarbonate resin composition according to any one of claims 1 to 12, wherein the polycarbonate resin composition has a fracture height of about 30 cm or higher, at which a 2 mm thick specimen is broken upon application of impact with a drop test device using a 2 kg weight according to a DuPont drop test method after the specimen is immersed in a thinner solution for 2 minutes and 30 seconds, dried at 80°C for 20 minutes, and left at room temperature for 24 hours.

14. The polycarbonate resin composition according to any one of claims 1 to 13, wherein the polycarbonate resin composition has a flame retardancy of V-0 or higher, as measured on a 0.6 mm thick specimen in accordance with the UL-94 vertical test method.

15. A molded article formed from the polycarbonate resin composition according to any one of claims 1 to 14.
